# EUROPEAN PATENT APPLICATION

(11) **EP 4 545 669 A1**
(43) Date of publication of application: **30.04.2025**
(21) Application number: 23830220.2
(22) Date of filing: 27.06.2023
(51) Int. Cl.: C22C 38/02, C22C 38/04, C22C 38/06, C22C 38/14, C22C 38/18, C21D 8/00

(54) **HOT-ROLLED COMPLEX-PHASE STEEL WITH 800-MPA-GRADE TENSILE STRENGTH AND MANUFACTURING METHOD THEREFOR**

(30) Priority: 27.06.2022 CN 202210745059
(71) Applicant: BAOSHAN IRON & STEEL CO., LTD., Shanghai 201900 (CN)
(72) Inventor: LIU, Chunsu, Shanghai 201900 (CN); YANG, Long, Shanghai 201900 (CN); WANG, Dong, Shanghai 201900 (CN); ZHANG, Yulong, Shanghai 201900 (CN); ZHU, Xiaodong, Shanghai 201900 (CN)
(74) Representative: Kuhnen & Wacker Patent- und Rechtsanwaltsbüro PartG mbB
(86) International application number: PCT/CN2023/102609
(87) International publication number: WO 2024/002043

(57) **Abstract**

A hot-rolled complex-phase steel with an 800-MPa-grade tensile strength and a manufacturing method therefor. The hot-rolled complex-phase steel comprises: C: 0.04-0.08%, Si: 0.05-0.45%, Mn: 1.4-1.8%, N: ≤0.005%, O: ≤0.0030%, Ca ≤0.004%, Al: 0.02-0.1%, Ti: 0.07-0.13%, Cr: 0.1-0.7%, and B: ≤0.0035%, with the balance being Fe and other inevitable impurities. The final microstructure of the steel is bainite, and contains a small amount of martensite and retained austenite, and a nanoscale microalloy precipitation-strengthened ferrite. The longitudinal yield strength of the steel is greater than or equal to 680 MPa, the tensile strength is greater than or equal to 780 MPa, the elongation A50 is greater than or equal to 15%, [KV(20°C)-KV(-40°C)]/KV(20°C) is less than or equal to 0.35, the ratio of KV(-40°C)/thickness is greater than or equal to 10 J/mm, and the punching reaming rate is greater than or equal to 65%. The hot-rolled complex-phase steel has a high fracture resistance, can be used as an automobile chassis and a structural part, and meets the technical requirements of the flanging and stamping of automotive complex parts, as well as automotive lightweighting.

## Description

### Technical field

The present disclosure belongs to the field of high-strength hot-rolled steel plate, in particular relates to a hot-rolled complex phase steel plate with a tensile strength reaching 800MPa grade, good forming characteristics such as hole expansion, and fracture toughness in the use process and manufacturing method thereof.

### Background Art

Lightweight has become the trend of the development of the automotive industry, and the proportion of high-strength steel plates in automotive structural parts is also increasing. At the same time of improving the strength, many models currently use 80kg grade steel plates to produce automobile chassis parts, such as control arms, tie rods, spring seats, etc. The forming process of the control arm includes stamping, flanging, hold expanding, etc.; at the same time, there are certain requirements for fracture toughness in the use process.

Patent document 1 (CN103602895A) discloses a high hole expansion steel plate having a tensile strength of 780MPa grade and its manufacturing method, wherein its Si content is 0.5-1.5%. Since the Si content is high, it is easy to form fayalite (2FeO-SiO2) iron oxide scale which is difficult to remove, and it is difficult to obtain a relatively high-grade surface of the strip. At the same time, because the red iron oxide scale on the surface of the steel plate is difficult to control, it is difficult to accurately measure the temperature in the process of hot rolling temperature measurement, resulting in the instability of product performance.

Patent document 2 (CN108570604A) discloses a 780MPa grade hot-rolled pickled high hole-expansion steel and its manufacturing method, wherein it comprises 0.2-0.6% of Al. Since the Al content is high, oxidation tends to occur during the continuous casting process, and a three-stage cooling method is adopted, and the production stability is low.

Patent document 3 (CN105483545A) discloses an 800MPa-grade hot-rolled high hole-expansion steel plate and its manufacturing method, the composition of which comprises 0.2-1.0% of Si. The Si content is relatively high, and the surface is easy to form red iron oxide scale, which is not conducive to the control of surface and coiling temperature. At the same time, it comprises 0.03-0.08% of Nb. The Nb content is also relatively high, the cost is high, and a complex multi-stage cooling process is needed after rolling.

Patent document 4 (CN104513930A) discloses an ultra-high strength hot-rolled complex phase steel plate and strip with good bending and hole-expansion properties and the manufacturing method thereof. It emphatically discloses the performance design and manufacturing method of the hot-rolled pickled plate, and the chemical composition does not consider the role of element B.

The above patent documents only consider the hole expansion performance in the forming process, and does not consider the characteristics of fracture toughness in the use process. Based on this, the present disclosure proposes a novel hot-rolled steel plate with a tensile strength of 800MPa grade and manufacturing method thereof.

### Summary

The problem to be solved by the present disclosure

An object of the present disclosure is to provide a hot-rolled complex phase steel plate with a tensile strength of 800MPa grade and manufacturing method thereof, wherein the hot-rolled steel plate has high fracture toughness in addition to the characteristics such as high hole expansion ratio, high strength, and high elongation. It can be used as automobile body structural parts and automobile chassis parts, can also be used in other application fields where high strength, weight reduction, anti-collision, etc. are required, and has relatively high safety. In this context, the tensile strength of 800MPa grade refers to the tensile strength of ≥ 780MPa.

### Technical solutions to solve the problems

In order to achieve the above purpose, the present disclosure proposes a hot-rolled complex phase steel with a tensile strength of 800MPa grade, which is characterized in that, in addition to Fe and other unavoidable impurities, it further comprises the following elements in mass percentage: C: 0.04-0.08%, Si: 0.05-0.45%, Mn: 1.4-1.8%, N≤0.005%, O≤0.0030%, Ca≤0.004%, Al: 0.02-0.1%, Ti: 0.07-0.13%, Cr: 0.1-0.7%, B: ≤0.0035%.

Further, in the hot-rolled complex phase steel with a tensile strength of 800MPa grade, the mass percentage of chemical elements is: C: 0.04-0.08%, Si: 0.05-0.45%, Mn: 1.4-1.8%, N≤0.005%, O≤0.0030%, Ca≤0.004%, Al: 0.02-0.1%, Ti: 0.07-0.13%, Cr: 0.1-0.7%, B: ≤0.0035%, with a balance of Fe and other unavoidable impurities.

Further, the chemical composition of the steel plate satisfies: (1) 0.1% ≤ Cr≤ 0.2% and 0.0020% ≤ B≤0.0035%, or (2) 0.2% <Cr≤0.35% and 0.0010% ≤B<0.002%, or (3) 0.35% < Cr≤0.7% and B<0.0010%.

Further, among the other unavoidable impurities of the steel plate, P is ≤ 0.02%, S is ≤ 0.005%.

Further, the microstructure of the steel plate comprises: bainite with an area fraction of ≥90%, martensite and residual austenite with an area fraction of ≤5%, and a ferrite strengthened by nanoscale microalloy precipitation with an area fraction of ≤5%. The bainite has a grain size of ≤ 5 µm, the martensite and residual austenite have a grain size of ≤ 2.5 µm, and the ferrite strengthened by nanoscale microalloy precipitation has a grain size of ≤ 7.5 µm.

Further, the microstructure of the steel plate contains TiN as an inclusion. In this context, TiN includes non-composite TiN and composite TiN. Composite TiN includes TiN containing CaO and Al₂O₃. The size of TiN is preferably ≤8 µm. Further, the size of the inclusions of the steel plate satisfies: the sizes of TiN and composite TiN containing CaO, Al₂O₃ and so on are ≤8 µm.

Further, the steel plate has good forming properties, and it has a longitudinal yield strength of ≥ 680MPa, a tensile strength of ≥ 780MPa, an elongation A50 of ≥15%, and a punching hole expansion ratio of ≥65%.

Further, the steel plate has good fracture resistance, and its impact toughness satisfies: [KV(20 °C)-KV(-40 °C)]/KV(20 °C)≤0.35, and KV(-40 °C)/thickness ≥10J/mm.

In some embodiments, the longitudinal yield strength of the steel plate is 680MPa, 690MPa, 700MPa, 710MPa, 720MPa, 730MPa, 740MPa or within the range of any two values mentioned above.

In some embodiments, the tensile strength of the steel plate is 780MPa, 800MPa, 820MPa, 840MPa, 860MPa, 880MPa, 890MPa, 900MPa or within the range of any two values mentioned above.

In some embodiments, the elongation A50 of the steel plate is 15%, 16%, 17%, 18%, 19%, 20%, 21%, 22%, 23%, 24% or within the range of any two values mentioned above.

In some embodiments, the punching hole expansion ratio of the steel plate is 65%, 70%, 80%, 90%, 100%, 110%, 120%, 130%, 140% or within the range of any two values mentioned above.

In some embodiments, the impact toughness of the steel plate satisfies: [KV(20 °C)-KV(-40 °C)]/KV(20 °C)≤ 0.35, or ≤0.3, or ≤0.25, or ≤0.2, or ≤0.15, or ≤0.1, or ≤0.05.

In some embodiments, the impact toughness of the steel plate satisfies: KV(-40 °C)/thickness ≥ 10J/mm, or ≥ 11J/mm, or ≥ 12J/mm, or ≥ 13J/mm, or ≥ 14J/mm, or ≥ 15J/mm or ≥ 16J/mm, or ≥ 17J/mm.

The mechanism of the chemical composition of the present disclosure is as follows:
C: in the hot-rolled complex phase steel plate described in the present disclosure, considering that the level of carbon content largely determines the tensile strength level of the steel plate, carbon is used for solid solution strengthening, and forms sufficient precipitation strengthening phase with Ti and the like, so as to ensure the strength of steel. But if the mass percentage of carbon is high, it can make the carbide particles coarse, and it is easy to form too much martensite and residual austenite, which is not conducive to hole expansion performance. In order to ensure both high hole expansion and good forming and welding performance under the strength of steel grade, in the technical solution described in the present disclosure, the mass percentage of C is controlled to be 0.04-0.08%, for example, 0.05%, 0.06%, 0.07%.

Si: In the hot-rolled complex phase steel plate described in the present disclosure, silicon plays a solid solution strengthening role and improves the strength of the steel plate. At the same time, the addition of silicon can increase the work hardening rate and the uniform elongation and the total elongation under a given strength, and helps to improve the elongation of the steel plate. In addition, silicon can also prevent the precipitation of carbides and reduce the appearance of pearlite phases. However, the silicon comprised in the steel is easy to form the surface defects of 2FeO-SiO2 iron oxide scale on the surface of the steel plate, which has a negative effect on the surface quality. Based on this, in the technical solution of the present disclosure, the mass percentage of silicon is controlled to be 0.05-0.45%, such as 0.10%, 0.15%, 0.20%, 0.25%, 0.30%, 0.35%, 0.40%.

Al: In the hot-rolled complex phase steel plate described in the present disclosure, Al is the deoxidizing element of steel, which reduces the oxide inclusion in the steel and purifies the steel quality, which is conducive to improving the forming performance of the steel plate, but if the mass percentage of aluminum is relatively high, oxidation will occur, which will further affect the continuous casting production. Based on this, in the technical solution of the present disclosure, the mass percentage of Al is controlled to be 0.02-0.1%, such as 0.04%, 0.06%, 0.08%.

Mn: In the hot-rolled complex phase steel plate described in the present disclosure, manganese is a solid solution strengthening element. If the mass percentage of manganese is low, it will lead to insufficient strength, but if the mass percentage of manganese is high, it will cause the plasticity of the steel plate to decrease. At the same time, manganese delays the pearlite transformation, improves the hardenability of the steel and reduces the bainite transition temperature, refines the substructure of the microstructure of the steel, and ensures that the slat substructure is obtained, and the steel has good formability under the premise of ensuring the tensile strength of the product. But an overly high Mn content can cause centerline segregation, which can promote separation when punching or cutting this steel plate strip, and damage the hole expansion formability. Based on this, in the technical solution of the present disclosure, the mass percentage of Mn is controlled to be 1.4-1.8%, for example, 1.5%, 1.6%, 1.7%.

Cr: In the hot-rolled complex phase steel plate of the present disclosure, chromium is the element that inhibits the generation of pearlite, is conducive to the formation of bainite structure, and is ultimately conducive to the improvement of strength and hole expansion ratio. When the chromium content is low, the influence on the phase transformation curve is not significant, but when the mass percentage of Cr is relatively high, on the one hand, the cost is relatively high, and on the other hand, it is easy to produce more martensitic structure. Based on this, in the technical solution of the present disclosure, the mass percentage of Cr is controlled to be 0.1-0.7%, such as 0.2%, 0.3%, 0.4%, 0.5%, 0.6%.

Ti: In the hot-rolled complex-phase steel plate described in the present disclosure, titanium is one of the important grain-refinement strengthening and precipitation-strengthening elements, and Ti can increase the recrystallization temperature and refine the grain size in the hot-rolling process. At the same time, the combination of Ti and C has a good strengthening effect. However, the mass percentage of Ti should not be too high, since it is easy to form TiN with large size, which is not good for the impact toughness of steel. Therefore, in the technical solution described in the present disclosure, the mass percentage of Ti is controlled to be 0.07-0.13%, for example, 0.08%, 0.09%, 0.10%, 0.11%, 0.12%.

B: in the hot-rolled complex phase steel plate described in the present disclosure, boron is conducive to expanding the bainite phase zone, ensuring that the bainite structure can be obtained in the post-rolling cooling of the steel plate, and the strength and hardness of the steel are significantly improved, and the content of Cr can be partially replaced by B to reduce the cost. However, too much B element will lead to the appearance of too many massive martensite structures in the steel plate, resulting in a decrease in the hole expansion ratio and elongation of the steel. Therefore, in the technical solution of the present disclosure, the mass percentage of B is controlled to be B: ≤0.0035%.

O: In the hot-rolled complex phase steel plate described in the present disclosure, oxygen is an unavoidable element in the steelmaking process. For the present disclosure, the content of O in the steel will have a certain residue after deoxidation, which is easy to form oxides, and the inclusion itself will not cause obvious adverse effects on the properties of the steel plate. At the same time, Al₂O₃ is easy to become the nucleation of TiN, and promotes the growth of TiN. Therefore, in the technical solution of the present disclosure, the mass percentage of O is controlled to be O≤0.0030%.

Ca: In the hot-rolled complex steel plate described in the present disclosure, calcium can improve the morphology of sulfide such as MnS, so that the sulfide such as long strip MnS becomes spherical MnS, which is conducive to improving the morphology of inclusions, and then reduces the adverse effect of the long strip sulfide on the hole-expansion forming performance, but the addition of too much calcium will increase the amount of calcium oxide, which is not good for the hole expansion performance. Therefore, the amount of calcium added to the steel is usually ≤ 0.004%.

N: In the hot-rolled complex phase steel plate described in the present disclosure, nitrogen belongs to an impurity element, and its content should be as low as possible, but nitrogen is an unavoidable element in the steelmaking process. Although its content is low, it is combined with strong carbide forming elements such as Ti. Since TiN is square, there is a large stress concentration between its sharp corners and the matrix, and the stress concentration between TiN and the matrix is easy to form cracks, and it also has a great impact on the fracture toughness and hole expansion performance. Therefore, in the present disclosure, the content of nitrogen should be controlled to be ≤0.005%.

In the hot-rolled complex phase steel plate described in the present disclosure, in other unavoidable impurities, P is ≤0.02%, S is ≤0.005%.

In terms of composition design, the main purpose of Ti is to refine the grain as explained in the following point (1)-( 3) and strengthen the precipitation as explained in the following point (4): (1) during the heating process of the slab, the precipitate of Ti prevents the growth of original austenite grains, and (2) in the hot rolling process, TiC is conducive to increasing the recrystallization temperature and further refining the austenite grains; (3) the precipitated Ti(C,N) or Ti(Cr)C is conducive to the refinement of the phase transitioned bainite and a small amount of martensite grains; (4) in the laminar flow cooling process, the nanoscale precipitate of TiC or Ti(Cr)C has a strong precipitation strengthening effect; the carbon content design needs to be coordinated with the Ti content to ensure the sufficient precipitation of Ti, and at the same time, the N content should be strictly controlled to be ≤ 0.005% to avoid consumption of Ti content by excessive N.

In terms of composition design, the contents of Cr and B are further satisfied: (1) 0.1% ≤Cr≤ 0.2% and 0.0020%≤B≤0.0035%, or (2) 0.2%<Cr≤ 0.35% and 0.0010% ≤B<0.002%, or (3) 0.35%<Cr≤0.7% and B<0.0010%. The addition of an appropriate amount of Cr and B elements is to obtain bainite structure, martensite-austenite islands with smaller size during the hot rolling coiling process, without pearlite and massive martensite that affect the hole expansion performance.

The manufacturing method of the hot-rolled complex-phase steel plate with a tensile strength of 800MPa grade described in the present disclosure comprises the following steps: (1) smelting, continuous casting; (2) hot rolling; (3) pickling.

In some embodiments, the manufacturing method of the hot-rolled complex-phase steel plate with a tensile strength of 800MPa grade described in the present disclosure comprises the following steps:

### (1) Smelting and continuous casting

smelting and casting are carried out according to the above chemical composition; the superheat of the steelmaking process is preferably controlled to be 15-60°C.

### (2) Hot rolling

The slabs obtained after smelting and continuous casting are preferably heated to 1200-1300 °C and preferably thermally insulated for 1-3 hours; and then rolled, wherein the rough rolling outlet temperature is preferably 1000-1080 °C and the final rolling temperature (i.e. finish rolling outlet temperature) is preferably 840-950°C. The total reduction rate is controlled to be ≥ 80%, and the total reduction rate of finish rolling is ≥ 50%; the reduction rate of the final rolling pass is preferably ≤15%, and the rolling speed (i.e., the threading speed) is preferably 7-13m/s.

Laminar flow cooling is preferably used after hot rolling. Preferably, a two-stage cooling is used to control the intermediate point temperature and cooling rate of the laminar flow cooling. The average cooling rate of the first stage is preferably ≥ 100 °C/s, the intermediate point temperature is preferably 600-720 °C, the cooling (such as air cooling) time is preferably 5-10s, and the average cooling rate of the second stage is preferably ≥ 30 °C/s.

Preferably, the steel plate is cooled (e.g. water-cooled) to 430-550°C for coiling after finish rolling.

Preferably, after the hot rolling and coiling, it is cooled to room temperature at a cooling rate of ≤ 100°C/h.

### (3) Pickling

The pickling stretching-bending straightening elongation is preferably 0.2-2%; the pickling speed is preferably controlled to be 60-150m/min, the temperature of the last pickling tank in the pickling process is preferably controlled to be 80-90°C, and the iron ion concentration is preferably controlled to be 30-40g/L.

The reasons for the manufacturing process design points of the present disclosure are as follows:
In step (1) above, massive, brittle TiN with sharp corners will become a potential crack source and greatly reduce the impact toughness and hole expansion performance of this type of steel grade. Moreover, the coarse TiN particles will nucleate and grow under the induction of some inclusions, which are generally composed of unavoidable Al₂O₃, CaO, MgO, etc. in the steelmaking process. The superheat of steelmaking has a greater impact. The greater the superheat, the more conducive to the control of inclusions, but greater superheat is also conducive to the growth of TiN. Therefore, while the content of Al and Ca in the steelmaking process is strictly controlled, the superheat is strictly controlled to be 15-60 °C.

In the above step (2), for Ti-containing steel, the heating temperature of the slab is particularly important for the performance, and a large amount of large-size Ti (C, N) will precipitate in the continuous casting process, and the heating temperature is set to ≥1200 °C. The main purpose is that during the heating process of the slab, Ti and other alloying elements are solid solved as much as possible to facilitate the subsequent nanoscale precipitation of Ti and other microalloys in the hot rolling and coiling process. When the temperature exceeds 1300°C, there will be a tendency of grain coarsening, which is not conducive to the toughness of the steel plate. Therefore, it is preferable to set the heating temperature to 1200-1300°C.

In the above step (2), the rough rolling temperature control and rolling speed of the hot rolling process have a great influence on Ti and other microalloys, Ti will precipitate in the form of Ti carbides and carbonitrides at a relatively low rough rolling temperature and during the finish rolling process, and the precipitation size of this process is large, which is not conducive to the improvement of the final strength, but the precipitated TiC and Ti(Cr)N are conducive to the refinement of austenite grains, so the rough rolling outlet temperature is controlled to be 1000-1080 °C.

In the above step (2), the most intense temperature range of Ti precipitation temperature is between 600 °C and 750 °C, and the actual coiling temperature is lower than this temperature. In order to better play the nanoscale precipitation strengthening effect of TiC, a two-stage cooling is adopted in the laminar flow cooling process, wherein the intermediate point temperature is 600-720 °C, for example, 600-700 °C, the air cooling time is 5-10s, and the average cooling rate of the first stage of the laminar flow cooling is controlled to be ≥ 100 °C/s, and the average cooling rate of the second stage is controlled to be ≥30 °C/s.

In the above step (2), the present disclosure comprises an appropriate amount of Cr and B in order to improve bainite strength, that is, Cr and B satisfy the following relationship: (1) 0.1%≤Cr≤0.2% and 0.0020%≤B≤0.0035%, or (2) 0.2%<Cr≤0.35% and 0.0010%≤B<0.002%, or (3) 0.35%<Cr≤0.7% and B<0.0010%. Due to the addition of Cr and B, the formation of ferrite and pearlite has been well inhibited, but it is also relatively easy to form massive secondary martensite and residual austenite, so the laminar flow cooling process during hot rolling has a great influence on the volume fraction of bainite phase transition. In the present disclosure, in order to obtain suitable bainite phase transition, and a martensite austenite island with a small size, a relatively low hot-rolling and coiling temperature needs to be strictly controlled. If the coiling temperature is high, the size of secondary martensite and residual austenite will be large, which is not conducive to the improvement of hole expansion ratio. If the coiling temperature is low, a primary martensite structure may occur and a low elongation will be obtained. Therefore, the coiling temperature is controlled to be 430-580°C, e.g. between 430°C and 550°C.

In the above step (2), after coiling, the cooling rate of ≤ 100°C/h is used to cool to room temperature, which is conducive to promoting the further transformation of bainite, the tempering of martensite, and the further precipitation of microalloys. It is conducive to the improvement of strength, hole expansion ratio, elongation, and impact toughness.

Beneficial effects of the present disclosure are as follows:
(1) The present disclosure is a low-cost design and invention that adopts a low-cost microalloy Ti element instead of a precious microalloy such as Nb and V; the present disclosure adopts the low-cost Cr and B elements, rather than precious microalloys such as Mo. Therefore, the alloy cost of the present disclosure is lower;
(2) The present disclosure adopts precise microstructure control and inclusion level control, and cooperates with reasonable steelmaking level control, can produce a hot-rolled complex phase steel plate with a tensile strength of 800MPa grade in the traditional hot continuous rolling production line or low-carbon short-process production line;
(3) The hot-rolled complex phase steel plate of the present disclosure has the characteristics of high strength, high formability, high toughness, etc., and it has a longitudinal yield strength of ≥ 680MPa, a tensile strength of ≥ 780MPa, an elongation A50 of ≥15%, [KV (20 °C) - KV (-40 °C)] / KV (20 °C) ≤ 0.35, and KV (-40 °C) / thickness ≥ 10J/mm, and a punching hole expansion ratio of ≥ 65%. It can be used as automobile body structural parts and automobile chassis parts, and can also be used in other applications that require high strength and weight reduction.

### Description of the drawings

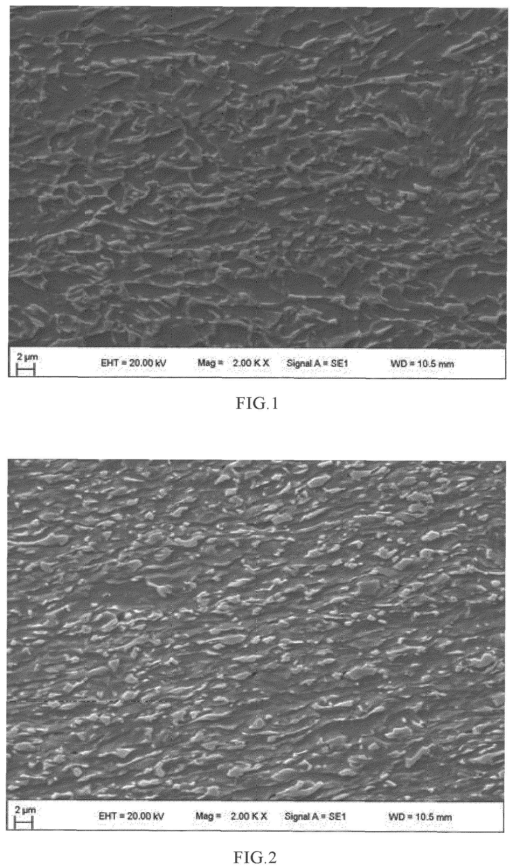

Fig. 1 is a typical metallographic photograph of Example 1 steel of the present disclosure (95% bainite + 3% martensite and austenite + 2% ferrite, bainite grain size of 3.8 µm, martensite austenite island grain size of 1.5 µm, ferrite grain size of 3.5 µm).
Fig. 2 is a typical metallographic photograph of Comparative Example 23 steel of the present disclosure (73% bainite + 25% martensite and austenite + 2% ferrite, bainite grain size of 3.8 µm, martensite austenite island grain size of 3.0 µm, ferrite grain size of 3.5 µm).

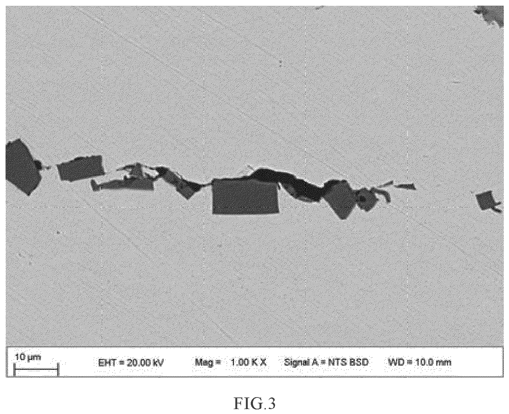

Fig. 3 is a typical metallographic photograph of Comparative Example 24 steel of the present disclosure (TiN size reaches 12 µm, with a large amount of continuous TiN).

### Detailed Description

### The present disclosure is further described below in conjunction with the examples.

The steel of different compositions shown in Table 1 was smelted, and heated, hot-rolled and pickled according to the process shown in Table 2 to obtain a steel plate with a thickness of ≤ 5.5mm. The manufacturing method of steel plate specifically comprised the following steps:

### (1) Smelting and continuous casting

smelting and casting were carried out according to the chemical composition in Table 1; the superheat of the steelmaking process was controlled to be 15-60°C;

### (2) Hot rolling

The slabs obtained after smelting and continuous casting were heated to 1200-1300°C and thermally insulated for 2 hours; and then rolled, wherein the rough rolling outlet temperature was 1000-1080 °C; the final rolling temperature was 840-950°C; the total reduction rate was ≥80%, and the total reduction rate of finish rolling was ≥50%; the reduction rate of the final rolling pass was ≤15%, and the rolling speed was 7-13m/s;
After hot rolling, a two-stage laminar flow cooling was used to control the intermediate point temperature and cooling rate of the laminar flow cooling. The average cooling rate of the first stage was ≥ 100 °C/s, the intermediate point temperature was 600-720 °C, the cooling time was 5-10s, and the average cooling rate of the second stage was ≥ 30 °C/s;
The steel plate was cooled to 430-550°C for coiling;
After coiling, it was cooled to room temperature at a cooling rate of ≤100°C/h;

### (3) Pickling

The pickling stretching-bending straightening elongation was 1%; the pickling speed was controlled to be 100m/min, the temperature of the last pickling tank in the pickling process was controlled to be 85°C, and the iron ion concentration was controlled to be 35g/L.

The following methods were used to determine the mechanical properties of steel plates, and the results were shown in Table 3:
The yield strength, tensile strength and elongation A50 were measured on a JIS 5# sample stretched along the longitudinal direction, and the mechanical properties were tested in accordance with the GB/T228.1-2010 standard.

The hole expansion ratio was determined by the hole expansion test, and the specimen with a hole in the center was pressed into the die with a punch, so that the center hole of the specimen was enlarged until the edge of the plate hole was necked or through cracked. Because the preparation method of the original hole in the center of the specimen had a great influence on the test results of the hole expansion ratio, the original hole in the center of the specimen was prepared by punching and reaming respectively, and the subsequent test and test method were carried out according to the hole expansion ratio test method specified in the ISO/DIS 16630 standard. The hole expansion ratio in Table 3 was the punching hole expansion ratio.

The impact toughness test was carried out in accordance with the GB/T 229-2020 Metallic materials-Charpy pendulum impact test method, and the thickness of the impact specimen was the original sample thickness.

The microstructure of the steel plates was observed and analyzed using the following methods, and the results were shown in Table 4:
Area fraction determination method: the specimen was polished and corroded at a magnification of 2000x, and then a fixed threshold was set for quantitative analysis using ImagePro, and the area fractions of bainite, martensite and austenite, and ferrite were further determined by grayscale differentiation of structures.

Grain size determination method: the specimen was polished and corroded at a magnification of 2000x according to ASTM E112 standard.

Determination method of TiN inclusion size: determination was carried out according to the GBT10516-2005 standard measurement method.

Examples 1-4, 8-10, 15 and 18-22 of Table 2 adopted the components and proportions shown in Table 1, and Ti was added at the same time to increase the precipitation strengthening and grain refinement effect during the hot rolling process, and at the same time met the hot rolling process in Table 2, and finally the hot-rolled complex phase steel plate achieved the microstructure and mechanical properties of Table 3. The microstructure of steel plates in the examples satisfied: the area fraction of bainite was ≥ 90%, the area fraction of martensite and residual austenite was ≤5%, the area fraction of ferrite strengthened by nanoscale microalloy precipitation was ≤5%, and the grain size of bainite was ≤5 µm, the grain size of martensite and residual austenite was ≤ 2.5 µm, the grain size of ferrite strengthened by nanoscale microalloy precipitation was ≤ 7.5 µm. The size of the inclusion of the steel plates in the examples satisfied: the size of TiN and composite TiN containing CaO, Al₂O₃ and so on was ≤ 8 µm. The steel plates in the examples had good forming properties, and it had a longitudinal yield strength of ≥ 680MPa, a tensile strength of ≥ 780MPa, an elongation A50 of ≥15%, a punching hole expansion ratio of ≥65%. The steel plates in the examples had good fracture resistance, and its impact toughness satisfied: [KV(20 °C) - KV(-40 °C)]/KV(20 °C) ≤ 0.35, and KV(-40 °C)/thickness ≥ 10J/mm.

Compared with Example 1-4, a fast cooling after rolling was adopted for Comparative Example 5, and the cooling rate after the hot rolling and coiling was too fast, resulting in a martensite phase transformation ratio of 13% after the supercooled austenite was coiled, resulting in a low hole expansion ratio. In terms of impact toughness, the impact toughness at -40°C decreased significantly compared with that at room temperature, decreasing by 36%. At the same time, KV(-40°C)/plate thickness=8.9J/mm, the impact toughness was relatively low. Different hot-rolling and coiling temperatures were used for Comparative Example 6-7, wherein a lower coiling temperature was used for Comparative Example 6, and the primary martensite content in the microstructure reached 70%, which ultimately led to higher tensile strength, lower elongation and hole expansion ratio, and KV(-40°C)/plate thickness=9.2J/mm, and lower impact toughness. A higher coiling temperature was used for Comparative Example 7, the ferrite content in the microstructure was higher and the grain was coarser, the area fraction of ferrite reached 30%, the grain size reached 8.2 µm, and the grain size of bainite was 7.5 µm, which was relatively large, resulting in KV(-40°C)/plate thickness=8.2J/mm and a low impact toughness.

Compared with Example 8-10, Comparative Example 11 was basically free of ferrite phase transformation in the laminar cooling process due to the lower intermediate point temperature, and finally the elongation was relatively low, which was 14.5%. For Comparative Example 12, due to the low total reduction rate of finish rolling, the recrystallization was insufficient, resulting in the coarse bainite and ferrite grains, and the grain sizes were 6.0 µm and 8.5 µm, respectively, resulting in low yield strength and relatively low hole expansion ratio, and at the same time, the coarse grain also led to low impact toughness, KV(-40 °C)/plate thickness = 8.0J/mm. For Comparative Example 13, due to the low rough rolling outlet temperature and the low final rolling temperature of finish rolling, in the rolling process, there was a ferrite phase transformation with a larger size and more area fraction, which ultimately led to a lower hole expansion ratio and impact toughness, a hole expansion ratio of 55%, and KV(-40 °C)/plate thickness = 8.8J/mm. For Comparative Example 14, due to the low heating temperature, the Ti content was not fully solid solved, and the coarse Ti(C,N) particles in the continuous casting process were not completely solid solved, and the contribution to the strength was small, exhibiting that the tensile strength of the steel plate was insufficient. For Comparative Example 16 and 17, the superheat of the smelting and continuous casting process was not controlled within a specific range, resulting in the formation of larger TiN, which also showed an effect on the hole expansion ratio.

For Comparative Example 23, due to the unreasonable ratio of Cr and B, the bainite phase transformation was low, and the proportion of martensite and residual austenite phase transformation was high, which contributes more to the strength, but reduces the elongation, hole expansion ratio and impact toughness, where [KV(20°C)-KV(-40°C)]/KV(20°C)=0.37, and KV(-40°C)/thickness=8.4J/mm.

For Comparative Example 24, due to the high content of elements such as Al and Ca, the unavoidable inclusions were formed in the smelting process, and in the solidification process, TiN used the mass point such as Al₂O₃ and the like as the nucleating point and grew, in which the size of TiN reached 12 µm, and there was a large amount of continuous TiN, which had a great impact on the hole expansion ratio and impact toughness, wherein [KV(20°C)-KV(-40°C)]/KV(20°C)=0.42%, and KV(-40°C)/thickness=7.4J/mm.

Since the content of C and Mn was higher, the hardenability of Comparative Example 25 was stronger, and the proportion of martensite was higher, which was 15%, resulting in low final elongation, hole expansion ratio and impact toughness. The elongation was 14.0%, the hole expansion ratio was 51%, [KV(20°C)-KV(-40°C)]/KV(20°C)=0.39, and KV(-40°C)/thickness=8.9J/mm.

Due to the high N content in Comparative Example 26, a large amount of Ti element was consumed, resulting in the precipitation of a large amount of massive TiN, however, the contribution of large particles of TiN to the strength was small, which reduced the strength of the steel plate, and at the same time, due to the microcracks caused by large sized TiN on the punching edge during punching, the punching hole expansion ratio was greatly affected.

**Table 1: the main chemical composition of examples and comparative examples of the present disclosure (mass %, with a balance of Fe and other unavoidable impurities except P, S and N)**

| Composition No | C | Si | Mn | Cr | Ti | P | S | N | Al | B | Ca | O | Notes |
|---|---|---|---|---|---|---|---|---|---|---|---|---|---|
| A | 0.07 | 0.35 | 1.55 | 0.50 | 0.12 | 0.011 | 0.0009 | 0.0045 | 0.038 | 0.0006 | 0.0025 | | example |
| B | 0.06 | 0.41 | 1.66 | 0.32 | 0.09 | 0.013 | 0.0011 | 0.0042 | 0.035 | 0.0015 | | 0.0005 | example |
| C | 0.04 | 0.45 | 1.78 | 0.15 | 0.08 | 0.008 | 0.0050 | 0.004 | 0.065 | 0.0028 | | | example |
| D | 0.08 | 0.05 | 1.46 | 0.65 | 0.11 | 0.014 | 0.0011 | 0.0023 | 0.072 | 0.0003 | 0.001 | 0.0010 | example |
| E | 0.055 | 0.43 | 1.55 | 0.70 | 0.13 | 0.011 | 0.0013 | 0.005 | 0.100 | 0 | | 0.0026 | example |
| F | 0.075 | 0.15 | 1.40 | 0.25 | 0.10 | 0.018 | 0.0006 | 0.0025 | 0.033 | 0.0018 | 0.0015 | | example |
| G | 0.063 | 0.25 | 1.80 | 0.10 | 0.07 | 0.02 | 0.0015 | 0.0025 | 0.020 | 0.0035 | 0.004 | | example |
| H | 0.07 | 0.35 | 1.55 | 0.50 | 0.12 | 0.011 | 0.0009 | 0.0045 | 0.038 | 0.0009 | 0.0025 | | example |
| I | 0.07 | 0.35 | 1.55 | **0.73** | 0.12 | 0.01 | 0.0009 | 0.0045 | 0.038 | **0.0048** | 0.0025 | | **comparative example** |
| J | 0.07 | 0.35 | 1.55 | 0.50 | 0.12 | 0.011 | 0.0009 | 0.0045 | **0.120** | 0.0006 | **0.005** | **0.005** | **comparative example** |
| K | **0.12** | 0.35 | **1.95** | 0.50 | 0.12 | 0.011 | 0.0009 | 0.0045 | 0.038 | 0.0006 | 0.0025 | | **comparative example** |
| L | 0.07 | 0.35 | 1.55 | 0.50 | 0.12 | 0.011 | 0.0009 | **0.0055** | 0.038 | 0.0006 | 0.0025 | | **comparative example** |

**Table 2: Steel plate manufacturing process**

| Steel plate No | Composition No | steelmaking | Hot rolling | | | | | Laminar flow cooling | | | | threading speed / m/s | Coiling temperature /°C | Cooling rate after coiling/°C/h | Notes |
|---|---|---|---|---|---|---|---|---|---|---|---|---|---|---|---|
| | | Superheat/°C | Heating temperature /°C | Rough rolling outlet temperature /°C | Finish rolling outlet temperature /°C | Total reduction rate/% | Total reduction rate of finish rolling /% | Cooling rate of the first stage /°C/s | Intermediate point temperature /°C | The intermediate point air cooling time /s | Cooling rate of the second stage /°C/s | | | | |
| 1 | A | 30 | 1250 | 1050 | 910 | 92 | 88 | 140 | 680 | 8.0 | 80 | 8.2 | 480 | 50 | example |
| 2 | | 30 | 1250 | 1050 | 910 | 92 | 88 | 100 | 720 | 5.0 | 30 | 7.0 | 480 | 50 | example |
| 3 | | 30 | 1250 | 1050 | 910 | 92 | 88 | 180 | 650 | 10.0 | 120 | 7.8 | 480 | 50 | example |
| 4 | | 30 | 1250 | 1050 | 910 | 92 | 88 | 200 | 600 | 9.8 | 40 | 7.0 | 480 | 50 | example |
| 5 | | 30 | 1250 | 1050 | 910 | 92 | 88 | 140 | 680 | 8.0 | 80 | 8.2 | 480 | **200** | **comparative example** |
| 6 | | 30 | 1250 | 1050 | 910 | 92 | 88 | 140 | 680 | 8.0 | 80 | 7.3 | **350** | 50 | **comparative example** |
| 7 | | 30 | 1250 | 1050 | 910 | 92 | 88 | 140 | 680 | 8.0 | 80 | 9.5 | **610** | 50 | **comparative example** |
| 8 | | 30 | 1250 | 1050 | 880 | 92 | 88 | 176 | 680 | 5.1 | 140 | 13.0 | 480 | 50 | example |
| 9 | | 30 | 1250 | 1050 | 950 | 92 | 88 | 140 | 680 | 9.0 | 90 | 7.9 | 520 | 50 | example |
| 10 | | 30 | 1200 | 1050 | 910 | 92 | 88 | 140 | 680 | 8.0 | 90 | 9.0 | 550 | 50 | example |
| 11 | | 30 | 1250 | 1050 | 910 | 92 | 88 | 185 | **550** | 12.0 | 70 | **6.7** | 480 | 50 | **comparative example** |
| 12 | B | 30 | 1250 | 1050 | 910 | 98 | **20** | 140 | 680 | 8.0 | 80 | 8.2 | 480 | 50 | **comparative example** |
| 13 | | 30 | 1250 | **930** | **820** | 92 | 88 | 95 | 680 | 8.0 | 80 | 8.4 | 480 | 50 | **comparative example** |
| 14 | | 30 | **1100** | **920** | 910 | 92 | 88 | 140 | 680 | 8.0 | 80 | 8.2 | 480 | 50 | **comparative example** |
| 15 | | 30 | 1250 | 1050 | 910 | 92 | 88 | 140 | 680 | 8.0 | 80 | 8.2 | 480 | 50 | example |
| 16 | C | **10** | 1250 | 1050 | 910 | 92 | 88 | 140 | 680 | 8.0 | 80 | 8.2 | 480 | 50 | **comparative example** |
| 17 | | **80** | 1250 | 1050 | 910 | 92 | 88 | 140 | 680 | 8.0 | 80 | 8.2 | 480 | 50 | **comparative example** |
| 18 | D | 25 | 1300 | 1080 | 910 | 92 | 88 | 140 | 680 | 8.0 | 80 | 8.0 | 450 | 50 | example |
| 19 | E | 42 | 1250 | 1000 | 880 | 92 | 88 | 140 | 680 | 8.0 | 80 | 8.4 | 480 | 50 | example |
| 20 | F | 50 | 1230 | 1050 | 910 | 92 | 88 | 140 | 680 | 8.0 | 80 | 8.4 | 500 | 50 | example |
| 21 | G | 36 | 1250 | 1050 | 910 | 92 | 88 | 140 | 680 | 8.0 | 80 | 7.8 | 430 | 50 | example |
| 22 | H | 30 | 1250 | 1050 | 910 | 92 | 88 | 140 | 680 | 8.0 | 80 | 8.2 | 480 | 50 | example |
| 23 | I | 30 | 1250 | 1050 | 910 | 92 | 88 | 140 | 680 | 8.0 | 80 | 8.2 | 480 | 50 | **comparative example** |
| 24 | **J** | 30 | 1250 | 1050 | 910 | 92 | 88 | 140 | 680 | 8.0 | 80 | 8.2 | 480 | 50 | **comparative example** |
| 25 | **K** | 30 | 1250 | 1050 | 910 | 92 | 88 | 140 | 680 | 8.0 | 80 | 8.2 | 480 | 50 | **comparative example** |
| 26 | **L** | 30 | 1250 | 1050 | 910 | 92 | 88 | 140 | 680 | 8.0 | 80 | 8.2 | 480 | 50 | **comparative example** |

**Table 3: Microstructure and mechanical properties of steel plates**

| Steel plate No | Thickness /µm | Composition No | Microstructure | | | | | | | mechanical properties | | | | | | | | Notes |
|---|---|---|---|---|---|---|---|---|---|---|---|---|---|---|---|---|---|---|
| | | | bainite | | M+ austenite | | ferrite | | TiN | Yield strength / MPa | Tensile strength / MPa | A50/ % | Hole expansion ratio /% | Impact toughness | | | | |
| | | | Area fraction/% | Grain size /µm | Area fraction% | Grain size /µm | Area fraction/% | Grain size /µm | Size/µm | | | | | 20°C | -40°C | K1 | K2/ J/mm | |
| 1 | 3.8 | A | 95 | 3.8 | 3 | 1.5 | 2 | 3.5 | ≤8 | 702 | 832 | 18.5 | 81 | 65 | 61 | 0.06 | 16.1 | example |
| 2 | 3.8 | | 94 | 4.5 | 3 | 1.5 | 3 | 4.9 | ≤8 | 693 | 828 | 19.0 | 75 | 63 | 60 | 0.05 | 15.8 | example |
| 3 | 3.8 | | 95 | 3.5 | 3 | 1.5 | 2 | 4.5 | ≤8 | 713 | 822 | 17.5 | 91 | 65 | 60 | 0.08 | 15.8 | example |
| 4 | 3.8 | | 95 | 3.0 | 3 | 1.5 | 2 | 4.3 | ≤8 | 720 | 846 | 17.0 | 85 | 70 | 68 | 0.03 | 17.9 | example |
| 5 | 3.8 | | **85** | 3.5 | **13** | **3.0** | 2 | 3.8 | ≤8 | 758 | 889 | 15.5 | **60** | 53 | 34 | **0.36** | **8.9** | **comparative example** |
| 6 | 3.8 | | **30** | 3.0 | **70** | **5.0** | - | - | ≤8 | 809 | 932 | **13.5** | **45** | 45 | 35 | 0.22 | **9.2** | **comparative example** |
| 7 | 3.8 | | **70** | **7.5** | - | - | **30** | **8.2** | ≤8 | 693 | 793 | 22.5 | 68 | 40 | 28 | 0.23 | **8.2** | **comparative example** |
| 8 | 2.5 | B | 95 | 3.8 | 3 | 1.5 | 2 | 3.5 | ≤8 | 683 | 829 | 19.0 | 79 | 36 | 31 | 0.14 | 12.4 | example |
| 9 | 2.5 | | 92 | 4.2 | 4 | 1.5 | 4 | 5.2 | ≤8 | 709 | 843 | 20.5 | 68 | 34 | 32 | 0.06 | 12.8 | example |
| 10 | 2.5 | | 90 | 4.0 | 5 | 2.5 | 5 | 7.5 | ≤8 | 682 | 788 | 21.5 | 65 | 33 | 29 | 0.12 | 11.6 | example |
| 11 | 2.5 | | 96 | 4.0 | 4 | 1.5 | - | - | ≤8 | 693 | 815 | **14.5** | 75 | 32 | 28 | 0.13 | 11.2 | **comparative example** |
| 12 | 2.5 | | 95 | **6.0** | 3 | 3.0 | 2 | **8.5** | ≤8 | **673** | 795 | 16.0 | **62** | 28 | 20 | 0.29 | **8.0** | **comparative example** |
| 13 | 2.5 | | 94 | 4.0 | 3 | 1.5 | **8** | **8.0** | ≤8 | 685 | 803 | 20.0 | **55** | 25 | 22 | 0.12 | **8.8** | **comparative example** |
| 14 | 2.5 | | 94 | 4.0 | 3 | 1.5 | 3 | 3.5 | ≤8 | **657** | **756** | 20.5 | 88 | 33 | 28 | 0.15 | 11.2 | **comparative example** |
| 15 | 2.0 | C | 95 | 3.8 | 3 | 1.5 | 2 | 3.5 | ≤8 | 718 | 868 | 18.0 | 75 | 29 | 26 | 0.10 | 13.0 | example |
| 16 | 2.0 | | 95 | 3.8 | 3 | 1.5 | 2 | 3.5 | **12** | 695 | 843 | 17.5 | **62** | 25 | 18 | 0.28 | **9.0** | **comparative** |
| | | | | | | | | | | | | | | | | | | **example** |
| 17 | 2.0 | | 95 | 3.8 | 3 | 1.5 | 2 | 3.5 | **9** | 705 | 851 | 17.5 | 65 | 25 | 19 | 0.24 | **9.5** | **comparative example** |
| 18 | 4.0 | D | 95 | 3.5 | 3 | 1.5 | 2 | 3.2 | ≤8 | 732 | 882 | 16.5 | 73 | 65 | 56 | 0.14 | 14.0 | example |
| 19 | 5.5 | E | 95 | 3.8 | 3 | 1.5 | 2 | 3.5 | ≤8 | 718 | 863 | 18.5 | 65 | 76 | 68 | 0.11 | 12.4 | example |
| 20 | 1.8 | F | 93 | 4.0 | 4 | 2.0 | 3 | 4.0 | ≤8 | 693 | 856 | 18.5 | 113 | 29 | 25 | 0.14 | 13.9 | example |
| 21 | 1.5 | G | 97 | 3.5 | 2 | 1.5 | 1 | 3.0 | ≤8 | 728 | 837 | 15.0 | 125 | 21 | 19 | 0.10 | 12.7 | example |
| 22 | 3.8 | H | 93 | 3.8 | 5 | 2.5 | 2 | 3.5 | ≤8 | 706 | 852 | 15.5 | 65 | 58 | 49 | 0.16 | 12.9 | example |
| 23 | 3.8 | **I** | **73** | 3.8 | **25** | **3.0** | 2 | 3.5 | ≤8 | 826 | 992 | **13.5** | **48** | 51 | 32 | **0.37** | **8.4** | **comparative example** |
| 24 | 3.8 | **J** | 95 | 3.8 | 3 | 1.5 | 2 | 3.5 | **12** | 718 | 832 | 17.5 | **53** | 48 | 28 | **0.42** | **7.4** | **comparative example** |
| 25 | 3.8 | **K** | **83** | 3.8 | **15** | **3.5** | 2 | 3.5 | ≤8 | 816 | 983 | **14.0** | **51** | 56 | 34 | **0.39** | **8.9** | **comparative example** |
| 26 | 3.8 | **L** | 94 | 3.8 | 3 | 1.5 | 3 | 6.5 | >8 | 663 | 782 | 18.5 | **63** | 58 | 52 | 0.10 | 13.7 | **comparative example** |

| | | | | | | | | | | | | | | | | | | |
|---|---|---|---|---|---|---|---|---|---|---|---|---|---|---|---|---|---|---|
| Notes: K1=[KV(20°C)-KV(-40°C)]/KV (20°C); K2=KV(-40°C)/thickness. | | | | | | | | | | | | | | | | | | |

## Claims

1. A hot-rolled complex phase steel with a tensile strength of ≥780MPa, which is **characterized in that**, in addition to Fe and other unavoidable impurities, it further comprises the following elements in mass percentage: C: 0.04-0.08%, Si: 0.05-0.45%, Mn: 1.4-1.8%, N≤0.005%, O≤0.0030%, Ca≤0.004%, Al: 0.02-0.1%, Ti: 0.07-0.13%, Cr: 0.1-0.7%, B: ≤0.0035%.

2. The hot-rolled complex phase steel with a tensile strength of ≥780MPa of claim 1, wherein the mass percentage of chemical elements is: C: 0.04-0.08%, Si: 0.05-0.45%, Mn: 1.4-1.8%, N≤0.005%, O≤0.0030%, Ca≤0.004%, Al: 0.02-0.1%, Ti: 0.07-0.13%, Cr: 0.1-0.7%, B: ≤0.0035%, with a balance of Fe and other unavoidable impurities.

3. The hot-rolled complex phase steel with a tensile strength of ≥780MPa of claim 1 or 2, wherein the chemical composition of the hot-rolled complex phase steel satisfies: (1) 0.1%≤Cr≤0.2% and 0.0020%≤B≤0.0035%, or (2) 0.2%<Cr≤0.35% and 0.0010%≤B<0.002%, or (3) 0.35%<Cr≤0.7% and B<0.0010%.

4. The hot-rolled complex phase steel with a tensile strength of ≥780MPa of claim 1 or 2, wherein, among the other unavoidable impurities, P is ≤ 0.02%, S is ≤ 0.005%.

5. The hot-rolled complex phase steel with a tensile strength of ≥780MPa of claim 1 or 2, wherein the microstructure of the hot-rolled complex phase steel comprises: bainite with an area fraction of ≥90%, martensite and residual austenite with an area fraction of ≤5%, and a ferrite strengthened by nanoscale microalloy precipitation with an area fraction of ≤5%; and the bainite has a grain size of ≤ 5 µm, the martensite and residual austenite have a grain size of ≤ 2.5 µm, and the ferrite strengthened by nanoscale microalloy precipitation has a grain size of ≤ 7.5 µm.

6. The hot-rolled complex phase steel with a tensile strength of ≥780MPa of claim 1 or 2, wherein the microstructure of the hot-rolled complex phase steel contains TiN and the size of TiN is ≤8 µm.

7. The hot-rolled complex phase steel with a tensile strength of ≥780MPa of claim 1 or 2, wherein the hot-rolled complex phase steel has a longitudinal yield strength of ≥ 680MPa, a tensile strength of ≥ 780MPa, an elongation A50 of ≥15%, [KV(20 °C)-KV(-40 °C)]/KV(20 °C)≤0.35, KV(-40 °C)/thickness ≥10J/mm and a punching hole expansion ratio of ≥65%.

8. A manufacturing method of the hot-rolled complex phase steel with a tensile strength of ≥780MPa of any one of claims 1-7, comprising the following steps: (1) smelting, continuous casting; (2) hot rolling; (3) pickling.

9. The manufacturing method of the hot-rolled complex phase steel with tensile strength of ≥780MPa of claim 8, wherein in the smelting, continuous casting step, the superheat is controlled to be 15-60 °C.

10. The manufacturing method of the hot-rolled complex phase steel with tensile strength of ≥780MPa of claim 8, wherein in the hot-rolling step, the heating temperature is 1200-1300 °C, and the rough rolling outlet temperature is 1000-1080 °C; the total reduction rate is controlled to be ≥ 80%, and the total reduction rate of finish rolling is controlled to be ≥ 50%; the final rolling temperature is 840-950 °C; and the rolling speed is 7-13m/s.

11. The manufacturing method of the hot-rolled complex phase steel with tensile strength of ≥780MPa of claim 8, wherein in the hot rolling step, a two-stage laminar flow cooling is used after hot rolling to control the intermediate point temperature and cooling rate of the laminar flow cooling, wherein the average cooling rate of the first stage is ≥ 100 °C/s, the intermediate point temperature is 600-720 °C, the cooling time is 5-10s, and the average cooling rate of the second stage is ≥ 30 °C/s.

12. The manufacturing method of the hot-rolled complex phase steel with tensile strength of ≥780MPa of claim 8, wherein in the hot rolling step, the coiling temperature is 430-550°C.

13. The manufacturing method of the hot-rolled complex phase steel with tensile strength of ≥780MPa of claim 8, wherein in the hot rolling step, after the coiling, it is cooled to room temperature at a cooling rate of ≤ 100°C/h.

14. The manufacturing method of the hot-rolled complex phase steel with tensile strength of ≥780MPa of claim 8, wherein in the step of pickling, the pickling stretching-bending straightening elongation is 0.2-1%; the pickling speed is controlled to be 60-150m/min, the temperature of the last pickling tank in the pickling process is controlled to be 80-90°C, and the iron ion concentration is controlled to be 30-40g/L.
